# EUROPEAN PATENT APPLICATION

(11) **EP 1 262 891 A1**
(43) Date of publication of application: **04.12.2002**
(21) Application number: 02005457.3
(22) Date of filing: 08.03.2002
(51) Int. Cl.: G06F 17/60

(54) **Customized advertising methods for personal media services**

(30) Priority: 01.06.2001 US 872226
(71) Applicant: Hewlett-Packard Company (a Delaware corporation), Palo Alto, CA 94304 (US)
(72) Inventor: Cherry, Darrel D., Meridian, Idaho 83642 (US); Schmeling, Garth F., Boise, Idaho 83704 (US)
(74) Representative: Schoppe, Fritz, Dipl.-Ing.

(57) **Abstract**

A personalized media service (100) is provided wherein advertising providers (150) bid in real-time for advertisement space in a media on demand product. An identified user makes a media request from a media selection interface computer (120) based upon a list of available media displayed on a display device (160). Advertisements for a produced hardcopy of the media request are customized according to user preferences associated with the identified user to provide a user with a tailored media experience.

## Description

### FIELD OF THE INVENTION

This invention involves an advertising bidding service for advertisements in media produced on demand. More particularly, the present invention involves the bidding for media advertising space based upon specific user information provided to advertisers during the media creation process.

### BACKGROUND OF THE INVENTION

Millions of people read media such as newspapers, magazines, and journals on a daily basis. Typically, the media is delivered to a home, a place of business, or a library. As computers and internet access become more prevalent, users are also beginning to read electronic media more frequently. Even with the proliferation of electronic media, however, many people prefer to read or browse hardcopies of their favorite media.

Many people have hardcopies of their favorite media delivered directly to their home or place of business on a periodic schedule. Newspapers are often delivered daily, and magazines typically arrive on a weekly or monthly basis. Other individuals purchase the media at local stores or newsstands. Many times, however, the local store or newsstand may not have the desired media in stock. Furthermore, if the media is obscure and not read by many individuals it is unlikely that the local store or newsstand will even carry the desired media. For example, a person living in the United States who desires a foreign magazine or newspaper may have a very hard time obtaining the desired media, especially if the individual lives in a rural location. Although the individual may be able to order a subscription to the media, delivery is often times delayed by days, if not weeks, due to the expenses involved with delivering media overseas. Thus, by the time the individual receives the desired media, much of the information may be outdated or no longer interesting to the purchaser.

In an attempt to provide more individuals timely access to media, many newspapers, magazines and journals are now available over the internet. An internet user may subscribe and access an electronic version of their favorite media for a fee. Those individuals subscribing to an internet subscription who prefer hardcopies must print out each article on a printer. Often times, printing the entire media on the printer of a home computer system is tedious and uses much more paper than the hardcopy counterpart sold by the media producer. For those individuals who prefer hardcopies of media, the availability of internet subscriptions or electronic copies of the desired media is not a favorable option.

Furthermore, hardcopies of media sold over-the-counter, or on a subscription basis, are not customizable. The ability of the media supplier to customize its articles to the particular customer is limited at best, and often times non-existent. In other words, a media copy sold in New York City will be the same as that sold in rural Nebraska. Although some media suppliers offer different versions, or local versions, of their media product, the customization is limited to a large target audience, usually in the neighborhood of thousands of individuals.

Similarly, the advertisements in the media are necessarily generic or targeted to the broad base of readers of the particular media. Advertisements are not tailored to particular areas or regions, let alone individual readers. The lack of customization of the advertisements makes it impossible for the media producer to obtain premium dollars for the advertising space in the media. Likewise, advertisers often spend extreme amounts of money to place advertisements targeted at only a portion of a media readership base. For example, a product may be marketed towards households having combined incomes greater than a certain amount. To reach those households, however, the advertiser must advertise in a magazine whose readership also includes households having combined incomes less than that desired by the advertiser. Such practices are inefficient and expensive.

It is desirable, therefore, to provide a method for providing customized advertising geared specifically towards the individual purchasing the media. A service allowing real-time bids for advertising space in media customized for an individual provides the advertisers with significant savings while at the same time allowing the media provider to obtain the highest price for the advertising space in the media it sells.

### SUMMARY OF THE INVENTION

The present invention provides advertisers the ability to bid on advertisement space in media delivered to consumers "on demand." Furthermore, the present invention allows a personalized media service to obtain bids on advertisements to be placed in on demand media, thereby enabling a personalize media service to maximize the value of the advertising space sold for a given media. In addition, the user or consumer receives advertisements targeted toward the user's interests, benefiting the user, the advertisers and the media providers.

In a media on demand process, also known as a personalized media service, users select a desired media for on demand publication. Before receiving a hardcopy of the media, however, the user provides the personalized media service with information about the user. The information may be retrieved from a stored account or entered at the time of making a media request. The personalized media service uses the information to tailor the media and advertisements produced in response to the media request.

The personalized media service itself may include a number of components, including, but not limited to: a user "front end," otherwise known as a media selection interface or remote selection interface, one or more service providers, one or more content providers and one or more advertising providers. User media selections and user information are entered into the "front end" of the personalized media service. Based upon the entered information, a media request is passed to a service provider. The service provider may provide the desired media to fill the request or it may determine the appropriate content provider to query to retrieve the desired media selection. The service provider also obtains advertisements to include with the media. Based upon the user's information, advertisement space in the media is bid for. In this fashion, the available advertising space is filled. The advertisements are then retrieved as data stored on a medium accessible by the service provider or obtained by querying advertising providers. The media request is filled with the media and advertisements received by the service provider. Once the media selection interface receives the media and advertisements from the service provider, the media selection interface produces a hardcopy of the media.

Using the personalized media service, a registered user logs-in to a personalized media service and provides user information. The user selects the media they desire to have produced. Based upon the user's selection and information, the media content and advertisements are obtained. Advertisers bid on the advertisement space, allowing advertisers to target specific groups of consumers with specific advertisements. The bidding process also maximizes the value of the advertising space available in the media hardcopy. For example, a hardcopy of a media request for a sports magazine would contain sports stories and advertisements, all based upon the available user information.

### DESCRIPTION OF THE DRAWINGS

While the specification concludes with claims particularly pointing out and distinctly claiming that which is regarded as the present invention, the present invention can be more readily ascertained from the following description of the invention when read in conjunction with the accompanying drawings in which:

FIG. 1 illustrates a block diagram of one embodiment of the personalized media service of the present invention;

FIG. 2 illustrates a block diagram of one embodiment of the service provider of the present invention;

FIG. 3 illustrates a block diagram of one embodiment of the media selection interface of the present invention; and

FIG. 4 illustrates a block diagram of a display device of the present invention.

### DETAILED DESCRIPTION OF THE INVENTION

The present invention involves the creation of media on demand wherein both the media and advertisements are created in response to a user's preferences. More particularly, this invention involves the compilation of electronic information and the printing of a media hardcopy based upon the electronic information received. Using the present invention, a user may obtain a hardcopy of a desired media such as a magazine, newspaper, journal, or the like, such that the desired media, including advertisements, may be tailored to the user's preferences.

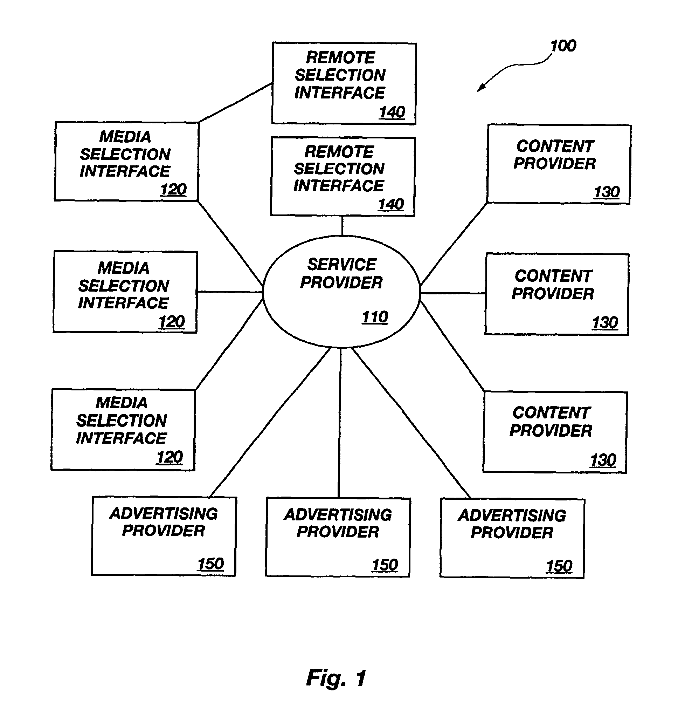

Using the present invention, a user desiring to obtain media hardcopy, such as a newspaper, magazine, short story, or otherwise, selects the desired media using a dynamic media selection interface. The user must log-in with an established account, or create an account, to use the personalized media service. After logging-in, the user executes a media selection using a media selection interface. The media selection interface queries a service provider to obtain the requested media. The service provider, in turn, queries a content provider for the media information and advertising providers for advertisements to place in the hardcopy media. The desired media is printed by the media selection interface and delivered to the user. In this general fashion, a user is able to obtain the desired media in the time it takes to compile and convert the electronic form of the media selection and advertisements to hardcopy. The concept is relatively simple and novel, and the method and components used to carry out the present invention are further explained with reference to FIGS. 1 through 4 and specific examples set forth herein.

A block diagram of one example of a personalized media service 100 of the present invention is illustrated in drawing FIG. 1. The personalized media service 100 comprises a service provider 110 in communication with a plurality of content providers 130, a plurality of media selection interfaces 120, a plurality of advertising providers 150, and, optionally, at least one remote selection interface 140. A user desiring to obtain a hardcopy of a selected media from the personalized media service 100 selects the desired media using either a media selection interface 120 or a remote selection interface 140. For example, a user selects a magazine from options displayed by a media selection interface 120. The media selection interface 120 queries the service provider 110 for the selected magazine. The service provider 110 queries the appropriate content provider 130 to retrieve an electronic copy of the selected magazine. At the same time, the service provider 110 queries the advertising providers 150 for advertisement bids based upon user information. The advertising providers 150 submit bids for advertising in the hardcopy of the media request based upon the user information provided The service provider 110 selects the advertisements it desires from the bids and requests the successful bidders to submit electronic copies of the advertisements to the service provider 110. The service provider 110 combines the electronic copies of the advertisements to the electronic copy of the selected magazine. The service provider 110 communicates the electronic copy of the selected magazine and advertisements to the media selection interface 120. Based upon the information received, the media selection interface 120 prints and binds the selected magazine, with advertisements, while the user waits.

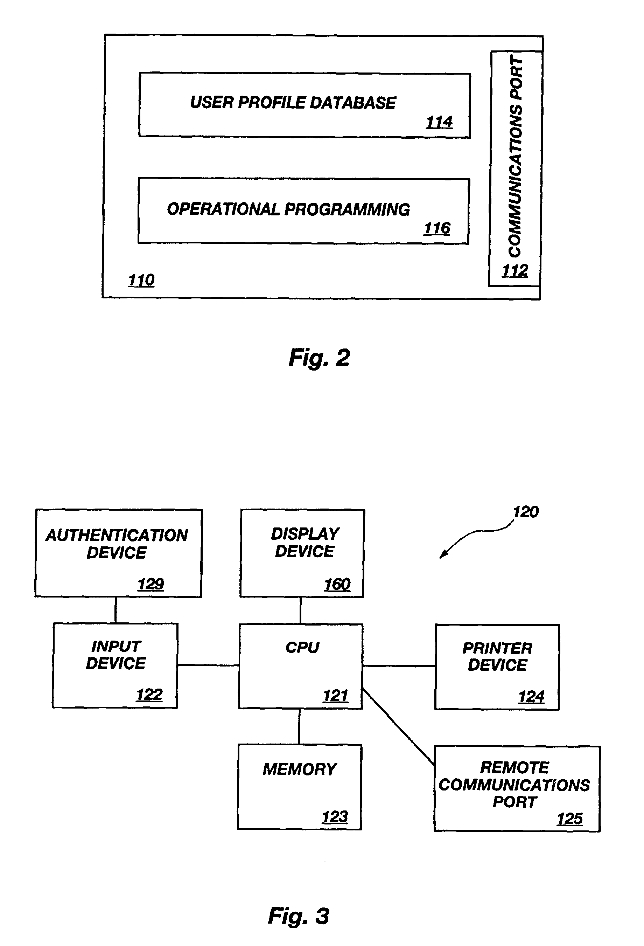

Typically, the service provider 110 is a computer system or network, including standard input, output, and processing capabilities as known in the art. The service provider 110 communicates with the content providers 130, media selection interfaces 120, and remote selection interfaces 140 via at least one communications port 112 as illustrated in drawing FIG. 2. The communications ports 112 may include any one of a modem, cable, satellite link, internet connection, or other communication method well known in the art of data communications. The communications ports 112 connect the service provider 110 to the media selection interface 120, content providers 130, advertising providers 150, and any remote selection interfaces 140 if available. The service provider 110 also includes at least one user profile database 114 for storing user data. Operational programming 116 or software functions, such as executable commands, stored within or accessed by the service provider 110 query the necessary content providers 130 and compile the data received by the content providers 130 for transmission to a desired media selection interface 120.

A user profile database 114 stored by a service provider 110 may include demographic information about a user, including, but not limited to, data such as gender, age, hobbies, interests, income, profession, education, marital status, vehicles owned, sports played, consumer goods owned, services used, and the like. Payment information may also be stored in a user profile database 114, such that when a user selects a desired media for delivery, the service provider 110 collects the necessary fees from the user from the information contained in the user profile database 114. For example, upon the user's selection of a desired media from a media selection interface 120, authorization is passed to the service provider 110 to debit the user's credit card for the cost of the service. The service provider 110 accesses credit card information for the particular user from the user profile database 114, and debits the user's credit card account. In another example, a user profile database 114 contains the billing information of the user. Records of a user's purchases using the personalized media service 100 are associated with the user and stored in a user profile database 114. At the end of a specified time period, such as monthly, quarterly, yearly, or the like, the service provider 110 accesses the user profile database 114 and bills the user based upon the billing and purchase information stored in the user profile database 114.

Content providers 130 are linked to the service provider 110 via data communications as known in the art. Typically, the content provider 130 is a media production business, such as a magazine publisher. The content provider 130 provides the service provider 110 with an electronic copy of media published by the content provider 130 at the service provider's 110 request. The content provider 130 may be credited or paid by the service provider 110 for each transaction carried out between the advertising provider 150 and the service provider 110.

Advertising providers 150 are also linked to the service provider 110 via data communications as known in the art. Typically, an advertising provider 150 is a computer system (not shown) having electronic copies of advertisements stored therein along with operational programming for receiving data and determining which, if any, of the stored advertisements relate to the data received. An advertising provider 150 may be owned by an advertising agency, a company, an individual, or any other group or entity wishing to place advertisements in media. For example, an advertising agency may operate an advertising provider 150 connected to a service provider 110 of a personalized media service 100. The advertising provider 150 stores a plurality of advertisements that the advertising agency wishes to distribute in various forms of media. The advertising provider 150 also contains operational programming capable of receiving data from a service provider 110 and determining what advertisements, if any, would be worth putting in the media being processed. The programming also assigns a value to the advertising potential, and based upon that value, submits a bid to the service provider 110 for the advertising space. The advertising provider 150 may submit numerous bids for numerous advertisements.

A media selection interface 120 allows a user to interact with the personalized media service 100. Media selection interfaces 120 may take many forms, but typically include input and output devices, at least one central processing unit (CPU), and a printing device for creating the media. The media selection interface 120 may be an automated unit or may be controlled by an operator capable of using and maintaining the media selection interface 120. Media selection interfaces 120 are typically located in commercialized areas frequented by consumers desiring to purchase media through a personalized media service 100. This includes areas such as shopping malls, grocery stores, bookstores, copy centers, and the like.

Illustrated in drawing FIG. 3 is a block diagram of the components of a typical media selection interface 120. The illustrated media selection interface 120 includes a central processing unit (CPU) 121, an input device 122, a memory 123, a printer device 124, a remote communications port 125, and a display device 160. An optional authentication device 129 is also illustrated. The CPU 121 may include a computer or series of computers capable of processing data and performing operational functions with the data. The input device 122 may include a mouse, a keyboard, a pen, joystick, or other device capable of allowing a user to communicate or transmit data to the CPU 121. The optional authentication device 129 communicates with the CPU 121 through the input device 122 or through a direct connection with the CPU 121 (not shown). Authentication devices 129 include any device used to validate the identity of a user utilizing the media selection interface 120. This includes personal identification numbers, metallic stripe readers, card readers, biometric sensors and the like. The memory 123 is one of any type commonly used with computers and data storage and processing as known in the art. The printer device 124 is capable of printing hardcopies of the media selected by the user in the same form as the media is usually published in. The remote communication port 125 is capable of connecting to a service provider 110, and may include a modem connection, an intemet connection, a cable connection, a wireless communications connection, a satellite connection, or other form of communication as known in the art of data communication. The display device 160 is typically any type of display device commonly utilized with computer systems such as a monitor, a flat-panel display, a touch-sensitive display, or the like. Each of the components of the media selection interface 120 work in concert to facilitate the production of a media hardcopy.

Interaction of the components of the media selection interface 120 are best explained with reference to the following example of an operation of the media selection interface 120 by a user. The media selection interface 120 remains in a dormant state until activated by a user. The dormant state of the media selection interface 120 is similar to a sleep mode of a computer as known in the art. Activation of the media selection interface 120 occurs through the selection of an activation switch (not shown) or by user interaction with an input device 122 of the media selection interface 120. Upon activation, a user may interact with and operate the media selection interface 120. In the dormant state, the display device 160 may be blank or it may display advertisements.

The present invention requires a user to log-in to the system so that the specific user may be identified. Numerous log-in methods are available. Users registered with a service provider 110 may be issued a magnetic stripe card to swipe through a magnetic stripe card reader associated with the input device 122 of the media selection interface 120. The media selection interface 120 reads the information from the user's magnetic stripe card and stores it in the memory 123. In this manner the user is identified. Alternatively, a user is prompted to enter an identification code and corresponding password. The media selection interface 120 queries a service provider 110 with the information and compares the identification code and password to user data stored in a user profile database 114. The identity of the user is determined from this information. If the user is properly identified, the service provider 110 communicates verification to the media selection interface 120, allowing the process to continue. If the user is not identified, the service provider 110 queries the media selection interface 120 for user information. An unverified user is prompted by the media selection interface 120 to register with the personalized media service 100 by entering the necessary registration data. Such data may include demographical information and financial information as heretofore discussed.

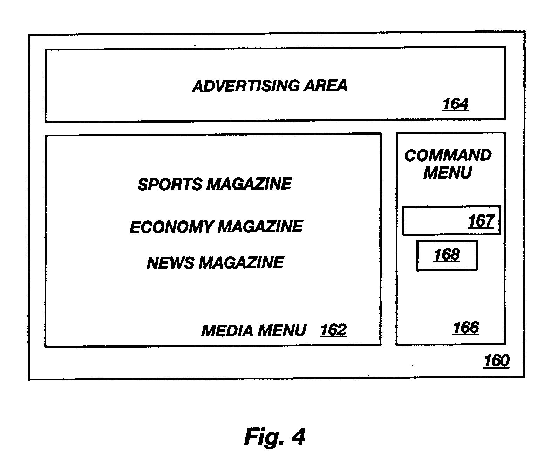

Upon activation of a media selection interface 120, the CPU 121 retrieves the titles of the available media from the memory 123 and displays them in a media menu 162, such as that illustrated in drawing FIG. 4. The CPU 112 may also query a service provider 110 for an updated list of available media and store the updated list in the memory 123. For example, the media menu 162 illustrated in drawing FIG. 4 indicates that the available media include a "Sports Magazine," an "Economy Magazine" and a "news magazine." A user selects the desired media from the media menu 162 using the input device 122 of the media selection interface 120. Although many different input devices 122 may be utilized, the most common input device 122 is a standard computer keyboard. Using the directional keys of a keyboard, a user selects the desired media from the list in the media menu 162. Depending upon the number of selections available to the user, the keyboard may be used to input a name, phrase, or word to search for in the databank of available media selections. For example, the optional command menu 166 may include a search term input field 167 and search button 168. As the user inputs a search term it is displayed in the search term input field 167. Selecting the search button 168 instructs the CPU 121 to search the memory 123 for any available media titles containing the entered search term. Corresponding available media are displayed in the media menu 162 based upon a completed search. Such search methods are well known in the art and, therefore, will not be explained further.

In one embodiment of the invention, the display device 160 and the input device 122 are combined as a touch screen display (not shown). A user chooses preferences from the display device 160 by physically touching that portion of the screen associated with the desired preference. The use of such touch screen displays is well known and, therefore, will not be explained further herein.

Selection of an available media product from the media menu 162 constitutes a media request. The media selection interface 120 queries a service provider 110 with the media request. Using the remote communications port 125, the media selection interface 120 communicates data to the service provider 110 via the communications port 112. The communicated data is sufficient to inform the service provider 110 of the media request requirements. For example, each of the available media stored in the memory 123 of the media selection interface 120 may also be associated with an identification code stored in the memory 123. The media selection interface 120 retrieves the identification code corresponding to the media request from its memory 123 and transmits the identification code to the service provider 110. The service provider 110 receives the identification code and compares it to a stored database to determine the proper content provider 130 to query to obtain an electronic copy of the media request. The service provider 110 then queries the content provider 130 and retrieves an electronic copy of the media request.

At the same time that the service provider 110 is querying the content provider 130 for an electronic copy of the media, the service provider 110 is also querying the advertising providers 150 for advertisements to place in the hardcopy of the media to be made for the user. Before querying the advertising providers 150, the service provider 110 accesses the user profile database 114 to obtain specific information about the user. The service provider 110 then communicates the user's specific information to the advertising providers 150 along with information about the number, size, and locations of the advertisements that are to be used in the production of the media request hardcopy. Information about the advertisement space available may include information such as the page that the advertisement will appear on, the size of the advertising space available, whether or not the advertisement will be in color or grayscale, and other similar information. An advertising provider 150 may be provided with advertising information about individual advertisement spaces, groups of advertising spaces, or all of the advertising spaces available in the media. All of this advertising data or information aids the advertising provider 150 in determining whether or not it wishes to bid on particular advertising space.

After obtaining the information about the available advertising space and the user, the advertising provider 150 determines if the user falls within a class of people the advertising provider 150 wishes to target with its advertisements. For instance, an advertisement for a fairly expensive diamond ring may be targeted at users having incomes greater than some benchmark value. If the user information provided to the advertising provider 150 indicates that the particular user has an income well below the benchmark value, the advertising provider 150 will most likely pass on bidding on the advertising space being offered. However, if the user's data indicates that the user's income is over the benchmark value, the advertising provider 150 may wish to bid on advertising space in the media being created. If the user has also indicated that they are interested in diamonds, the advertising provider 150 may wish to increase its bid for advertising space because the user is a prime target for the diamond advertisement.

Additionally, according to the advertising information, the advertising provider 150 determines where in the media it would like to place its advertisement. The advertising provider 150 may assign different values to the different portions of the media. For example, the advertising provider 150 may assign a higher value to the first few advertisements in the media because it is more likely that the user will pay more attention to the first few advertisements as compared to advertisements appearing further back in a hardcopy of the media. The advertising provider 150 also determines the size of the advertisement that it wishes to place. A larger advertisement may be desirable if the user is highly interested in the subject advertised whereas a smaller advertisement may be more cost effective if the user is only marginally interested in the subject matter of the advertisement.

Other considerations which the advertising provider 150 may take into account include the price the advertisers are willing to pay, the number of advertisements for each product that may be placed in the media, the popularity of the media, and other common advertising considerations as known in the art. Based upon the considerations heretofore discussed, the advertising provider 150 assigns a value to each of the advertising spaces available in the media request and submits bids for the advertising space to the service provider 110. Because many advertising providers 150 may be advertising agencies representing different clients, it is possible that a single advertising provider 150 may place multiple bids on the same available advertising space for its clients.

After a specified period of time, the service provider 110 analyzes the bids received for the advertising space available and picks the best bid. The best bid is typically the highest bid, but the service provider 110 may also use other criteria in determining which bids to accept. The advertising providers 150 whose bids are accepted are notified by the service provider 110 of the acceptance, and queried for an electronic copy of the advertising material. For each accepted advertisement, the advertising provider 150 submits an electronic version of the advertisement to the service provider 110 for publication. The service provider 110 debits the accounts of the advertising providers 150 for the amounts of the accepted bids and credits the content provider 130 for a portion of the advertising proceeds earned for the particular transaction.

The service provider 110 combines all of the advertisements with the electronic media received from the content provider 130. In some instances, the service provider 110 compiles the electronic media with the electronic advertisements to create a complete electronic file of the media with advertisements. In other instances, the service provider 110 provides the electronic media and the electronic advertisements as separate groups of data to a media selection interface 120 where all of the information is compiled before the printing of the media occurs.

The combination of the electronic media with the customized advertisements provides a user with media on demand where the advertisements are specifically geared or targeted towards the particular user. The advertising providers 150 benefit because they only pay for the advertisements in media targeted at specific users. Similarly, the content provider 130 and the personalized media service 100 benefit because they receive premium prices for each advertising space in the media produced.

In addition to customizing the advertisements, the media may also be personalized to the individual user. When a user logs-in to the personalized media service 100, the user's demographic information and user preferences are available in a user profile database 114 stored with the service provider 110. The demographic information and user preferences may be combined with a media request to allow the content provider 130 to customize the electronic copy of the media sent back to the service provider 110 and the media selection interface 120 for distribution. For example, a user may designate information about bicycling as a preference over other sports articles for any sports media ordered through the personalized media service 100. If the user logs-in to the personalized media service 100 and selects a sports magazine as the requested media, the service provider 110 communicates the preference for bicycling to the content provider 130 along with the media request. The content provider 130, in turn, may acknowledge the preference by including more articles or information about bicycling in the electronic media request copy returned to the service provider 110. The content provider 130 may include multiple targeted articles dealing with the specific interest of the user. In the bicycling example, the targeted articles may include information on the user's preferred brands, trail reviews about areas that the user prefers to ride, or other detailed information such that it appears that the media was written specifically for the user.

Similarly, the content provider 130 could provide a user with "bonus" material based upon a user's preferences. For example, the service provider 110 automatically transmits the user's preferences and demographic information to the content provider 130. The content provider 130 analyzes the user information and includes "bonus" material with the electronic media copy to the service provider 110. Such "bonus" material may include such things as additional articles corresponding with the user's interests or samples of other media published by the content provider 130 which the user may be interested in based upon the demographic information provided to the service provider 110.

A user may also complete a media request using a remote selection interface 140. Typically, the remote selection interface 140 is a computer program or internet connection capable of communicating with a service provider 110 or media selection interface 120. A user logs-in and submits a media request to the personalized media service 100 using the remote selection interface 140 in much the same way that a user would log-in to a media selection interface 120. However, the user must also designate the method of delivery for the hardcopy of the media when using the remote selection interface 140. For instance, an internet connection to a service provider 110 acts as a remote selection interface 140. The user logs-in and makes a media request. The remote selection interface 140 then prompts the user to select the method of delivery for the hardcopy of the media. The user may choose to pick up the media at a nearby media selection interface 120, or have a hardcopy of the media delivered to the user via mail or other delivery system. Once the media request and delivery choice are complete, the service provider 110 processes the media request the same way as a request from a media selection interface 120. If the user chose to pick up the hardcopy of the media at a nearby media selection interface 120, the service provider 110 sends the electronic media copy to that media selection interface 120 for printing and binding. If the user requests that the hardcopy of the media be mailed or delivered, the service provider 110 either sends the electronic media copy, along with delivery information, to the media selection interface 120 nearest the user for processing, or the service provider 110 prints the media and initiates the delivery process. In this manner, a user in a remote location, or a user lacking access to a media selection interface 120, may utilize the personalized media service 100 from the comfort of their own home.

Having thus described certain preferred embodiments of the present invention, it is to be understood that the invention defined by the appended claims is not to be limited by particular details set forth in the above description, as many apparent variations thereof are possible without departing from the spirit or scope thereof as hereinafter claimed.

## Claims

1. A personalized media service device (100) for producing hardcopy media tailored to an individual consumer having a media selection interface computer (120) for retrieving a media request from a user and printing a hardcopy of the requested media, at least one advertising provider (150) for bidding on advertising space in media and providing electronic copies of advertising material, at least one content provider (130) for providing electronic copies of the requested media, and a service provider computer network (110) for storing user profiles, querying a content provider (130) for an electronic copy of a media request, and querying an advertising provider (150) for advertisement bids and electronic advertisements.

2. A personalized media service device (100) according to Claim 1, wherein the media selection interface computer (120) includes a central processing unit (121) for communicating with an input device (122), a memory (123), a display device (160), and a printer device (124).

3. A personalized media service device (100) according to Claims 1 and 2, wherein the service provider computer network (110) includes at least one user profile database for storing information about registered users including demographic information such as gender, age, hobbies, interests, income, profession, education, marital status, vehicles owned, sports played, consumer goods owned, services used, and user preferences.

4. A personalized media service device (100) according to Claims 1, 2, and 3, wherein the at least one content provider (130) comprises a computer system for retrieving a media request including user information, compiling an electronic media copy without advertisements, and communicating the electronic media copy to the service provider (110).

5. A personalized media service device (100) according to Claims 1, 2, 3, and 4, wherein the at least one advertising provider (150) comprises a computer system for receiving information about advertisement space in a media including user information, and bidding on the advertising space.

6. A method of customizing advertisements for a media hardcopy to an individual, comprising retrieving a media request and user information from a media selection interface (120), communicating the media request and user information to a service provider (110), querying a content provider (130) for an electronic copy of the media associated with the media request, communicating an electronic copy of the media associated with the media request from a content provider (130) to the service provider (110), querying an advertising provider (150) for bids on advertisement space, accepting certain bids, communicating electronic copies of advertisements associated with the certain bids from an advertising provider (150) to the service provider (110), communicating the electronic copy of the media associated with the media request and the electronic copies of advertisements from the service provider (110) to the media selection interface (120), and printing a hardcopy of the media and advertisements.

7. The method of customizing advertisements for a media hardcopy to an individual according to Claim 6, wherein querying a content provider (130) for an electronic copy of the media associated with the media request, comprises, communicating the media request to the content provider (130), and communicating user information to the content provider (130) including demographic information such as gender, age, hobbies, interests, income, profession, education, marital status, vehicles owned, sports played, consumer goods owned, services used, and user preferences.

8. The method of customizing advertisements for a media hardcopy to an individual according to Claims 6 and 7, wherein querying an advertising provider (150) for bids on advertising space comprises determining the number of advertisement spaces desired for a media hardcopy, determining the size of each advertisement space, communicating the number and corresponding size of available advertisement spaces to an advertising provider (150), and communicating user information to the advertising provider (150) including demographic information such as gender, age, hobbies, interests, income, profession, education, marital status, vehicles owned, sports played, consumer goods owned, services used, and user preferences.

9. A method of creating a media hardcopy using a media selection interface computer (120) having a central processing unit (121) for communicating with an input device (122), a display device (160), a printer device (124) and a remote communications port (125), the input device (122) for retrieving information from a user, the display device (160) for displaying available media selections to a user, the printer device (124) for printing a media hardcopy, and the remote communications device (160) for querying a service provider (110) with a media request and receiving an electronic copy of media and advertisements for the media hardcopy, comprising using the input device (122) for communicating user information to the central processing unit (121), displaying available media selections on the display device (160), using the input device (122) for selecting an available media selection, communicating the user information and media selection to a service provider (110), querying a content provider (130) for an electronic copy of media associated with the media selection, querying at least one advertising provider (150) for bids on advertisement spaces, communicating an electronic copy of the media associated with the media selection from the content provider (130) to the service provider (110), communicating bids for advertisement spaces from the at least one advertising provider (150) to the service provider (110), selecting the preferred bids for advertisement spaces, querying the advertising providers (150) corresponding to the preferred bids for electronic copies of advertisements, communicating the electronic copies of advertisements to the service provider (110), communicating the electronic copies of the advertisements and the electronic copy of media associated with the media selection to the media selection interface (120), and printing a hardcopy of the media selection and advertisements.

10. The method of creating a media hardcopy using a media selection interface computer (120) according to Claim 9, wherein printing a hardcopy of the media selection and advertisements comprises compiling the electronic copies of the advertisements with the electronic copy of the media selection to form an electronic media file, and printing a hardcopy of the electronic media file using the printer device (124) of the media selection interface (120).
